# EUROPEAN PATENT SPECIFICATION

(11) **EP 2 654 458 B1**
(45) Date of publication and mention of the grant of the patent: **08.04.2015**
(21) Application number: 11804672.1
(22) Date of filing: 19.12.2011
(51) Int. Cl.: A23L 1/0524

(54) **GEL COMPOSITION COMPRISING LOW-METHOXY PECTIN**
GELZUSAMMENSETZUNG ENTALTEND NIEDRIG METHOXYLIERTES PEKTIN
COMPOSITION DE GEL COMPRENANT DE LA PECTINE FAIBLEMENT METHOXYLEE

(30) Priority: 22.12.2010 EP 10196657
(43) Date of publication of application: 30.10.2013
(73) Proprietor: Nestec S.A., 1800 Vevey (CH)
(72) Inventor: LAGARRIGUE, Sophie, 78462 Konstanz (DE); TOLEA, Andreea, 78462 Konstanz (DE)
(74) Representative: Mollet, Beat Max
(86) International application number: PCT/EP2011/073267
(87) International publication number: WO 2012/084843

(56) References cited:
- EP-A1- 1 431 313
- EP-A2- 0 758 531
- WO-A1-95/01101
- GB-A- 653 527
- JP-A- 2009 027 929
- US-A- 4 143 172

## Description

### TECHNICAL FIELD

This invention relates to a gel composition for preparing a food product and to a process for preparing a food product. In particular, the invention relates to a heat-reversible gel composition comprising pectin, specifically low-methoxy pectin, preferably amidated, as a gelling agent for preparing savoury food products.

### BACKGROUND

Concentrated food products such as bouillon or stock cubes have been known for many years. In the search for alternative product types having different characteristics and advantages over traditional food concentrates, food compositions concentrated in gel form have been developed. A number of such products are now known. They are typically based on the presence of a gelling agent or a combination of two or more gelling agents.

Those products based on a single hydrocolloid gelling agent usually do not exhibit all the characteristics needed for an easy to use food concentrate product. Thus, two-component hydrocolloid based gel systems have been developed. These each have their characteristics which may make them suitable for some food applications, but not others.

For example, WO 2007/068484, WO 2008/151850, WO 2008/151851 and WO 2008/151852 describe a combination of xanthan and various galactomannans (locust bean gum, tara gum, guar gum or cassia gum) as a gelling agent. Gelling temperature is typically around 60 °C, and the gel sets quickly during cooling. However, rapid gel setting on cooling can lead to an undesired texture when prepared by the consumer. Dissolution time for these gels is typically 2 to 3 minutes.

A combination of gelatin and starch is described in WO 2007/068402 and WO 2007/068483. The product dissolves in about 100 seconds, but the main problem with this combination is that a very high dosage of gelling agent is needed (greater than 10 %). Also, the presence of starch (3-6 % potato or corn) greatly increases the viscosity during processing due to starch gelatinisation. Furthermore, gelatin is not popular as a food ingredient with those on a vegetarian diet.

Pectins are traditionally used as a gelling agent for sweet products (e.g. jams). Low-methoxy pectins, especially amidated, are known to produce heat-reversible gels. It is well known that gel formation of low-methoxy pectins is mainly induced by the presence of divalent cations, such as calcium ions. The calcium ions form junction zones between two carboxyl groups of galacturonic acid located on two pectin molecules. When the pectin is amidated, gel formation is also induced by hydrogen bonding between amide groups. But little is known about the behaviour of pectin in the presence of high amounts of salt (NaCl). Literature data suggests that monovalent ions, such as sodium ions, tend to screen the carboxyl groups on the pectin molecules. This prevents the formation of junction zones and therefore gel formation. In the case where a gel could still be formed via hydrophobic interactions, this type of gel is unlikely to be heat-reversible, meaning that the gel will not melt when reheated.

It has now been found that under certain processing conditions, it is possible to use low-methoxy pectin, especially low-methoxy amidated pectin, to form savoury products in a gel format. The use of pectin has certain desirable characteristics over known gel compositions. It has also been found that addition of xanthan to the composition further improves the properties of the product and brings some surprising characteristics.

An object of the present invention is therefore to provide a gel composition that at least goes part way to overcoming one or more of the above disadvantages of existing gel compositions or at least provides a useful alternative.

### SUMMARY OF THE INVENTION

In a first aspect of the invention there is provided a composition in the form of a gel for preparing a food product, the composition comprising:
a) water in the amount of 30 to 70 % (by weight of the total composition),
b) flavourings in the amount of 1 to 40 % (by weight of the total composition),
c) salt in the amount of 10 to 25 % (by weight of the total composition), and
d) gelling agents in the amount of 0.6 to 7 % (by weight of the total composition), wherein the gelling agents comprise at least low-methoxy pectin, preferably low-methoxy amidated pectin, and
e) calcium ions in the amount of 1.0 to 10 % (by weight of the pectin).

In preferred embodiments of the invention, the gelling agents comprise an additional hydrocolloid, such as xanthan, locust bean gum, tara gum, cassia gum or starch.

The source of the calcium ions in the composition may be one or more of the other ingredients of the composition or may be an added calcium source, such as added calcium chloride, calcium lactate, or calcium citrate, provided that the total amount of available calcium ions in the composition is in the amount of 1.0 to 10 % (by weight of the pectin). Sequestering agents, such as sodium citrate, sodium pyrophosphate and sodium orthophosphate, may be added to control the availability of the calcium ions.

The amount of gelling agents in the composition may preferably be 0.8 to 2.5 %.

The composition may also comprise fat, preferably in the amount of 1 to 10 %. Maltodextrin or glucose syrup in the amount of up to 40 % may also be included. The amount of water is preferably in the range 40 to 60 %, more preferably 45 to 60 %. Flavorings are included in the composition typically in the amount of 1 to 40 %, preferably 5 to 15 %.

In preferred embodiments of the invention, the composition is adapted to be heat reversible, meaning that it melts when reheated to temperatures above 70 °C and dissolves in less than 2 minutes when added to boiling water.

The composition of the invention may be used to prepare any suitable food product, especially sauces, soups, stocks, bouillons or gravies.

In a second aspect of the invention there is provided a process for preparing a composition according to the invention in the form of a gel for preparing a food product comprising the steps:
a) mixing gelling agents including at least low-methoxy pectin, preferably low-methoxy amidated pectin in water,
b) heating at a temperature of at least 75 °C, preferably at least 80 °C
c) adding the calcium source together with salt and flavourings and mixing,
d) heating at a temperature of at least 75 °C, preferably at least 80 °C to pasteurize,
e) filling into containers, and
f) cooling to room temperature in less than 30 minutes, preferably less than 15 minutes, to form the gel.

The process may further comprise making a premix of the gelling agents with maltodextrin or glucose syrup and/or starch. The process may also comprise adding fat after mixing of the gelling agents.

In another aspect of the invention there is provided a use of the composition of the invention for preparing a food product, such as a sauce, soup, stock, soup base, bouillon or gravy.

### DETAILED DESCRIPTION

There is a need for a composition for preparing a food product having the texture of a gel and which is able to withstand high salt contents. The gel-forming composition should be able to set and melt reversibly. The melting temperature should be in a range allowing the composition to melt easily during a standard heating step or to allow dilution of the gel composition in hot water. There is further a need for a gel composition for preparing a food product that is stable during transportation and storage, and shows a low syneresis during storage typically for a few weeks or even up to several months.

It has now been found that these benefits may be achieved at least in part by a gel composition for preparing a food product comprising: 30 to 70 % water, 10 to 25 % salt, and 0.6 to 7 % gelling agents, wherein the gelling agents comprise at least low-methoxy pectin, preferably low-methoxy amidated pectin. In addition the composition comprises calcium ions in the amount of 1.0 to 10 % (by weight of the pectin), which is equivalent to 10 to 100 mg calcium / g of pectin. The calcium may originate from other ingredients in the composition or from an added source of calcium, such as calcium chloride, calcium lactate, calcium citrate, or a combination of both. Sequestering agents, such as sodium citrate, sodium pyrophosphate and sodium orthophosphate, may be added to control the availability of the calcium ions. In addition, the composition comprises 1 to 40 % of other ingredients typically encountered in savoury products such as flavourings (for example, flavoring agents, taste enhancing ingredients, herbs, spices, vegetable, meat and fish components in liquid or powder form), lipids, and carbohydrates or mixtures thereof. All percentages are based on weight of the total composition.

The term "gel", in the context of this invention, means a solid or semi-solid matrix formed by interaction with one or more polysaccharides and water, which is free standing over a time scale of at least a few minutes and which deforms partially in an elastic way when submitted to a deformation force.

The term "rupture strength" is used in reference to gel strength and relates to the deformation force needed to break the gel. The rupture strength of a gel should be at least 20 g, but preferably greater than 35 g, as measured using a Texture Analyser.

The term "heat reversible" indicates a gelling agent composition that is liquid at elevated temperatures, forms a gel during cooling to room temperature and melts again when reheated.

"Salt" refers to any suitable alkali metal salt or mixture thereof. The salt used in the composition of this invention is typically, but not limited to, sodium chloride. For example, potassium chloride may be used or any low-sodium product having a taste impression of sodium chloride may be used, as long as the taste in the end formulation is acceptable.

The term "pectin" refers to polysaccharides generally having a backbone consisting of a linear polymer of galacturonic acid and some branches of neutral sugars. Commercial pectins are derived from a variety of fruits or vegetable sources, mainly apple and citrus fruits. The carboxyl groups of the polygalacturonic acid are partly esterified by methanol. The ratio of methyl esterified galacturonic acid groups to total galacturonic acid groups is named degree of esterification.

The term "low-methoxy pectin" refers to a type of pectin that has been partially deesterified. Typically the degree of esterification (DE) is below 50%.

The term "low-methoxy amidated pectin" refers to a type of low-methoxy pectin in which some of the methyl ester groups have been converted to amide groups. The degree of amidation (DA) is defined as the ratio of amidated galacturonic acid groups to total galacturonic acid groups. Typically the degree of amidation is below 25%. The term "low-methoxy pectin" is often instead referred to as "low esterified pectin", "low ester pectin", or "conventional pectin". The term "low-methoxy amidated pectin" may be referred to as "amidated pectin". Commercial pectins are often standardised with sugars. In the context of this invention, the concentration of pectin should be understood as the amount of pectin included in the formulation, i.e. not as the amount of standardised pectin.

The term "xanthan" is a hetero-polysaccharide of high molecular weight commonly used as a food thickening agent (for example, in salad dressings) and as a stabiliser (for example, in cosmetic products). Its main chain is constituted of glucose units and its side chain is a trisaccharide consisting of alpha-D-mannose which contains an acetyl group, beta-D-glucuronic acid, and a terminal beta-D-mannose unit linked with a pyruvate group.

The term "flavourings", as used in this specification, includes flavouring agents, taste enhancing ingredients, herbs, spices, vegetables, fruits, meat, fish, crustaceans or particulates thereof.

The composition may comprise further ingredients selected from carbohydrates, lipids, or mixtures thereof. The lipids may be provided by oils, creamer, vegetable or animal fats, cream and any traditional ingredients used in the manufacture of savoury food compositions. Carbohydrates may be provided by sugars, starches, flours, maltodextrins, glucose syrups etc.

As used in this specification, the words "comprises", "comprising", and similar words, are not to be interpreted in an exclusive or exhaustive sense. In other words, they are intended to mean "including, but not limited to".

Further, any reference in this specification to prior art documents is not intended to be an admission that they are widely known or form part of the common general knowledge in the field.

The inventors of the present invention have surprisingly found that a heat reversible gel based on pectin can be formed in the presence of large amounts of salt. Further, the gelling temperature of the composition is unexpectedly lower than for similar known gel compositions. In addition, dissolution times of the gel when added to hot water are surprisingly much lower than for existing gel compositions despite having a comparable melting temperature. It has also been found that combining xanthan with low-methoxy amidated pectin modulates the texture of the gel formed, bringing more elasticity and also reducing its syneresis.

The concentration range of the gelling agent in the gel composition of the invention is 0.6 to 7 %, preferably 0.8 to 2.5 % (based on the total weight of the composition).

The gelling agents may comprise low-methoxy pectin only, preferably low-methoxy amidated pectin, or may additionally comprise xanthan or other agents. In the case where only pectin and xanthan are present, the ratio of pectin to xanthan is preferably in the range of 60:40 to 95:05, more preferably 70:30 to 95:05, and even more preferably 70:30 to 90:10.

In addition to low-methoxy amidated pectin, starch can be added as a thickening agent or gelling agent, either in native or modified form. In addition to low-methoxy amidated pectin, a thickener such as locust bean gum can be added.

The amount of water in the gel composition is in the range 30 % to 70 %, preferably 40 % to 60 %, more preferably 45 % to 60 %.

The amount of flavorings in the gel composition is in the range 1 to 40 %, preferably 5 to 15 %.

The amount of salt in the gel composition is in the range 10 to 25 %. When salt concentration increases, the dosage of the gelling agent has to be increased, typically at 25 % salt the minimum concentration of gelling agents required for gel formation is 0.9 %.

The amount of calcium ions in the gel composition is in the range 1.0 to 10 % (by weight of the pectin).

The composition according to the invention may further comprise fat in an amount of 1 to 10 %, such as, for example, emulsified or dispersed oil and/or fat. Further, the composition can comprise up to 40 % of maltodextrins and/or glucose syrup.

The invention further relates to a process for preparing the gel composition of the invention.

The process comprises the steps of heating water, adding the ingredients to the water and applying at least one additional heating step to the mixture during the process of adding the ingredients.

In particular, the process preferably comprises the steps of heating water to 50 °C and making a premix of the hydrocolloids with glucose syrup or maltodextrins. The premix containing the hydrocolloids is added to water under mixing and heated at a temperature of around 80 °C (at least 75 °C) to properly hydrate the gums. Additional dry ingredients premixed prior to addition, including salt, flavorings and the like, are then added. Any added calcium should be added together with the dry ingredients. Finally, the fat component is added and the complete composition is heated and pasteurized. The composition may then be filled into suitable containers and cooled to room temperature in less than 30 minutes, ideally less than 15 minutes. The containers and consequently the cooled composition can have any possible shape, preferably the shape of a cube, pellet, sphere, egg-shape or the like.

The resulting product is a gel composition being stable at room temperature and melting when reheated to temperatures above 70 °C and dissolving when added to boiling water in less than 2 minutes, most preferably in less than 1 minute, with or without an additional heating step.

The invention further relates to the use of a gel composition according to the invention for preparing a food product, such as a soup, sauce, bouillon, stock, soup base or gravy, by melting or diluting the composition in hot or boiling water. Typically, the amount of gel composition used would be 25-50 g/L of water, or 25-50 g/kg of, for example, rice or vegetables, if being used directly with solid foods rather than added to water.

The product of the invention has several advantages over known gel compositions. One advantage is that the gelling temperature is lower than known gel compositions, typically below 45 °C, also the gelling process during and after cooling is slow, especially when xanthan is present in the composition. Typically it takes several hours before the gel is properly formed, for example 12-48 hours or even longer.. In contrast, many known gel compositions form a gel as soon as the temperature is below 60-50 °C which can lead to a texture which is not desirable during consumption of the product. If the time between the food product preparation using the gel composition and the consumption is too long, the soup or sauce would form a gel texture again. The gel composition of the invention enables maintenance of a non-gelled texture for product consumption.

Another advantage is that when using pectin alone as the gelling agent, the viscosity during processing is lower than for known gel composition due to the low molecular weight of pectins. Another advantage is that the dissolution time when the product is added to hot water is much faster, typically less than 1 minute whereas known gel compositions dissolve in 2-3 minutes.

The clean label image of pectins compared with other known gelling agents used to prepare savoury concentrates is also a significant advantage for the gel compositions of this invention.

### EXAMPLES

The invention is further described with reference to the following examples. It will be appreciated that the invention as claimed is not intended to be limited in any way by these examples.

### Example 1: savoury gel with low methoxy amidated pectin (DE = 31%, DA =19%)

| **Ingredient** | **Amount [%]** |
|---|---|
| Water | 51.0 |
| Salt | 12.8 |
| Glucose syrup | 7.8 |
| Chicken fat | 5.6 |
| Pectin | 1.4 |
| CaCl₂ | 0.33 |
| Other ingredients | up to 100 |

Syneresis is measured as the amount of separated water divided by the amount of separated water + gel weight.

Rupture strength was measured using a Texture Analyser TAXT2 (Microstable systems) according to the following conditions:
- Load cell: 5 kg.
- Penetration test using a cylindrical probe of 1 inch radius.
- The sample was loaded just after heating into a container of 50 mm diameter, until reaching a height of 55 mm. The sample was allowed to cool and gel at ambient temperature for one day. Before performing the measurement, the sample is placed in a water-bath at 20 °C for temperature equilibration.
- Test conditions: pre-test speed: 1 mm/s, test speed: 0.5 mm/s, post speed: 10 mm/s. Measurement was stopped at 25 mm penetration depth.
- The rupture strength is recorded at the peak of the curve force versus penetration depth.

The resulting product was a gel having a gelling temperature in the range 40-45°C, a rupture strength of 155 g, which dissolves when added to hot water in approximately 80 sec and shows less than 5 % syneresis after 2 months.

### Example 2: gel with low methoxy amidated pectin (DE = 31%, DA =19%) and no added calcium

| **Ingredient** | **Amount [%]** |
|---|---|
| Water | 44.8 |
| Salt | 12.6 |
| Glucose syrup | 15.4 |
| Chicken fat | 5.6 |
| Pectin | 1.4 |
| Flavourings in powder form | 7.0 |
| Other ingredients | up to 100 |

The resulting product is a gel which has a rupture strength of 35 g.

### Example 3: gel with low methoxy amidated pectin (DE = 35%, DA =15%)

| **Ingredient** | **Amount [%]** |
|---|---|
| Water | 44.8 |
| Salt | 13.5 |
| Glucose syrup | 15.1 |
| Chicken fat | 5.5 |
| Particulates, e.g. herbs | 0.2 |
| Low methoxy amidated pectin | 1.4 |
| CaCl₂ | 0.22 |
| Other ingredients | up to 100 |

The resulting product is a gel which has a rupture strength of 78 g.

### Example 4: gel with low methoxy amidated pectin (DE = 31%, DA =19%) and xanthan

| **Ingredient** | **Amount [%]** |
|---|---|
| Water | 51.0 |
| Salt | 21.9 |
| Glucose syrup | 7.3 |
| Chicken fat | 5.6 |
| Yeast extract | 4.6 |
| Pectin | 1.4 |
| Xanthan | 0.5 |
| CaCl₂ | 0.33 |
| Other ingredients | up to 100 |

The resulting product is a gel which has a rupture strength of 65 g and dissolves when added to hot water in approximately 70 sec.

### Example 5: gel with low methoxy amidated pectin (DE = 31%, DA =19%) and starch

| **Ingredient** | **Amount [%]** |
|---|---|
| Water | 51.0 |
| Salt | 16.6 |
| MSG | 5.0 |
| I+G | 0.2 |
| Sugar | 4.0 |
| Oil | 7.0 |
| Pectin | 0.9 |
| CaCl₂ | 0.29 |
| Waxy rice starch | 2.0 |
| Other ingredients | up to 100 |

### Example 6: process

The general procedure for preparing gel compositions of the above examples is as follows:
- add water into a mixing vessel
- add gelling agents (preferably premixed with maltodextrin or glucose syrup)
- mix until a homogeneous composition is obtained and heat at a temperature of 80°C
- add all remaining ingredients into the vessel (salt and calcium source)
- mix and homogenize until no lumps are visible
- heat at a temperature of 80 °C and pasteurize
- fill a suitable container and close
- cool to room temperature in less than 15 minutes

It is to be appreciated that although the invention has been described with reference to specific embodiments, variations and modifications may be made without departing from the scope of the invention as defined in the claims.

## Claims

1. A composition in the form of a gel for preparing a food product, the composition comprising:
a) water in the amount of 30 to 70 % (by weight of the total composition),
b) flavourings in the amount of 1 to 40 % (by weight of the total composition),
c) salt in the amount of 10 to 25 % (by weight of the total composition), and
d) gelling agents in the amount of 0.6 to 7 % (by weight of the total composition), wherein the gelling agents comprise at least low-methoxy pectin, preferably low-methoxy amidated pectin, and
e) calcium ions in the amount of 1.0 to 10 % (by weight of the pectin).

2. A composition as claimed in claim 1, wherein the amount of gelling agents is 0.8 to 2.5 % (by weight of the total composition).

3. A composition as claimed in claim 1 or claim 2, wherein the gelling agents further comprise xanthan, locust bean gum, tara gum, cassia gum, or starch.

4. A composition as claimed in any one of claims 1 to 3, wherein the gelling agents comprise low-methoxy pectin and xanthan.

5. A composition as claimed in any one of claims 1 to 4, wherein the ratio of low-methoxy pectin and xanthan is in the range of 60:40 to 95:05, preferably in the range 70:30 to 90:10.

6. A composition as claimed in any one of claims 1 to 5, further comprising fat in the amount of 1 to 10 % (by weight of the total composition).

7. A composition as claimed in any one of claims 1 to 6, further comprising maltodextrin or glucose syrup in the amount of up to 40 % (by weight of the total composition).

8. A composition as claimed in any one of claims 1 to 7, wherein the amount of water is in the range 40 to 60 %, preferably 45 to 60 %.

9. A composition as claimed in any one of claims 1 to 8, wherein the amount of flavourings is in the range 1 to 40%, preferably 5 to 15%.

10. A composition as claimed in any one of claims 1 to 9, wherein at least some of the calcium ions are from added calcium salt, preferably calcium chloride, calcium lactate or calcium citrate.

11. A composition as claimed in any one of claims 1 to 9, wherein the calcium ions in the composition are from not added calcium salt.

12. A composition as claimed in any one of claims 1 to 11, wherein the food product is a sauce, soup, stock, bouillon, soup base or gravy.

13. A process for preparing a composition as claimed in any one of the claims 1 to 10 comprising the steps:
a) mixing gelling agents including at least low-methoxy pectin, preferably low-methoxy amidated pectin in water,
b) heating to a temperature of at least 75 °C, preferably at least 80 °C,
c) adding a calcium source together with salt and flavourings, and mixing,
d) heating at a temperature of at least 75 °C, preferably at least 80 °C, to pasteurize,
e) filling into containers, and
f) cooling to room temperature in less than 30 minutes, preferably less than 15 minutes, to form the gel.

14. A process as claimed in claim 13, further comprising making a premix of the gelling agents with maltodextrin and/or glucose syrup and/or starch.

15. A process as claimed in claim 13 or claim 14, further comprising adding fat after mixing of the gelling agents.

16. The use of a composition as claimed in any one of claims 1 to 11 for preparing a food product.

## Patentansprüche

1. Zusammensetzung in Form eines Gels zur Herstellung eines Lebensmittelproduktes, wobei die Zusammensetzung folgendes aufweist:
a) Wasser in der Menge von 30 bis 70 Gew.-% der Gesamtzusammensetzung,
b) Aromatisierungen in der Menge von 1 bis 40 Gew.-% der Gesamtzusammensetzung,
c) Salz in der Menge von 10 bis 25 Gew.-% der Gesamtzusammensetzung, und
d) Geliermittel in der Menge von 0,6 bis 7 Gew.-% der Gesamtzusammensetzung, wobei die Geliermittel mindestens niedrig methoxyliertes Pektin, vorzugsweise niedrig methoxyliertes, amidiertes Pektin aufweisen, und
e) Kalziumionen in der Menge von 1,0 bis 10 Gew.-% des Pektins.

2. Zusammensetzung nach Anspruch 1, wobei die Menge an Geliermitteln 0,8 bis 2,5 Gew.-% des Gesamtzusammensetzung beträgt.

3. Zusammensetzung nach Anspruch 1 oder 2, wobei die Geliermittel weiterhin Xanthan, Johannisbrotkernmehl, Tarakernmehl, Cassia-Gum oder Stärke aufweisen.

4. Zusammensetzung nach einem der Ansprüche 1 bis 3, wobei die Geliermittel niedrig methoxyliertes Pektin und Xanthan aufweisen.

5. Zusammensetzung nach einem der Ansprüche 1 bis 4, wobei das Verhältnis von niedrig methoxyliertem Pektin und Xanthan in dem Bereich von 60:40 bis 95:05, vorzugsweise in dem Bereich von 70:30 bis 90:10, liegt.

6. Zusammensetzung nach einem der Ansprüche 1 bis 5, weiterhin aufweisend Fett in der Menge von 1 bis 10 Gew.-% der Gesamtzusammensetzung.

7. Zusammensetzung nach einem der Ansprüche 1 bis 6, weiterhin aufweisend Maltodextrin oder Glukosesirup in der Menge von bis zu 40 Gew.-% der Gesamtzusammensetzung.

8. Zusammensetzung nach einem der Ansprüche 1 bis 7, wobei die Wassermenge in dem Bereich von 40 bis 60%, vorzugsweise 45 bis 60%, liegt.

9. Zusammensetzung nach einem der Ansprüche 1 bis 8, wobei die Menge an Aromatisierungen in dem Bereich von 1 bis 40%, vorzugsweise 5 bis 15%, liegt.

10. Zusammensetzung nach einem der Ansprüche 1 bis 9, wobei mindestens einige der Kalziumionen aus zugegebenem Kalziumsalz, vorzugsweise Kalziumchlorid, Kalziumlaktat oder Kalziumcitrat, stammen.

11. Zusammensetzung nach einem der Ansprüche 1 bis 9, wobei die Kalziumionen in der Zusammensetzung von nicht zugegebenem Kalziumsalz stammen.

12. Zusammensetzung nach einem der Ansprüche 1 bis 11, wobei das Lebensmittelprodukt eine Soße, Suppe, Brühe, Bouillon, Suppengrundlage oder Bratensoße ist.

13. Verfahren zur Herstellung einer Zusammensetzung nach einem der Ansprüche 1 bis 10, aufweisend die Schritte:
a) Mischen der Geliermittel, einschließlich mindestens niedrig methoxyliertes Pektin, vorzugsweise niedrig methoxyliertes, amidiertes Pektin, in Wasser,
b) Erwärmen auf eine Temperatur von mindestens 75°C, vorzugsweise mindestens 80°C,
c) Zugabe einer Kalziumquelle zusammen mit Salz und Aromatisierungen, und Vermischen,
d) Erwärmen bei einer Temperatur von mindestens 75°C, vorzugsweise mindestens 80°C, zum Pasteurisieren,
e) Abfüllen in Behälter, und
f) Abkühlen auf Raumtemperatur in weniger als 30 Minuten, vorzugsweise weniger als 15 Minuten, um das Gel zu bilden.

14. Verfahren nach Anspruch 13, weiterhin aufweisend die Herstellung eines Vorgemischs der Geliermittel mit Maltodextrin und/oder Glukosesirup und/oder Stärke.

15. Verfahren nach Anspruch 13 oder 14, weiterhin aufweisend die Zugabe von Fett nach dem Vermischen der Geliermittel.

16. Verwendung einer Zusammensetzung nach einem der Ansprüche 1 bis 11 zur Herstellung eines Lebensmittelproduktes.

## Revendications

1. Composition sous la forme d'un gel pour la préparation d'un produit alimentaire, la composition comprenant :
a) de l'eau dans une quantité de 30 à 70 % (en poids de la composition totale),
b) des agents aromatisants dans une quantité de 1 à 40 % (en poids de la composition totale),
c) du sel dans une quantité de 10 à 25 % (en poids de la composition totale), et
d) des agents de gélification dans une quantité de 0,6 à 7 % (en poids de la composition totale), dans laquelle les agents de gélification comprennent au moins de la pectine à faible teneur en méthoxy, de préférence de la pectine amidée à faible teneur en méthoxy, et
e) des ions calcium dans une quantité de 1,0 à 10 % (en poids de la pectine).

2. Composition selon la revendication 1, dans laquelle la quantité d'agents de gélification est comprise entre 0,8 et 2,5 % (en poids de la composition totale).

3. Composition selon la revendication 1 ou la revendication 2, dans laquelle les agents de gélification comprennent en outre du xanthane, de la gomme de caroube, de la gomme de tara, de la gomme de cassia, ou de l'amidon.

4. Composition selon l'une quelconque des revendications 1 à 3, dans laquelle les agents de gélification comprennent de la pectine à faible teneur en méthoxy et du xanthane.

5. Composition selon l'une quelconque des revendications 1 à 4, dans laquelle le rapport de la pectine à faible teneur en méthoxy et du xanthane est dans la plage de 60:40 à 95:05, de préférence dans la plage de 70:30 à 90:10.

6. Composition selon l'une quelconque des revendications 1 à 5, comprenant en outre de la matière grasse dans une quantité de 1 à 10 % (en poids de la composition totale).

7. Composition selon l'une quelconque des revendications 1 à 6, comprenant en outre de la maltodextrine ou du sirop de glucose dans une quantité allant jusqu'à 40 % (en poids de la composition totale).

8. Composition selon l'une quelconque des revendications 1 à 7, dans laquelle la quantité d'eau est dans la plage de 40 à 60 %, de préférence de 45 à 60 %.

9. Composition selon l'une quelconque des revendications 1 à 8, dans laquelle la quantité d'agents aromatisants est dans la plage de 1 à 40 %, de préférence de 5 à 15 %.

10. Composition selon l'une quelconque des revendications 1 à 9, dans laquelle au moins certains des ions calcium sont issus de sel de calcium ajouté, de préférence chlorure de calcium, lactate de calcium ou citrate de calcium.

11. Composition selon l'une quelconque des revendications 1 à 9, dans laquelle les ions calcium dans la composition sont issus de sel de calcium non ajouté.

12. Composition selon l'une quelconque des revendications 1 à 11, dans laquelle le produit alimentaire est une sauce, une soupe, un bouillon, un bouillon, une base de soupe ou une sauce au jus de viande.

13. Procédé pour la préparation d'une composition selon l'une quelconque des revendications 1 à 10, comprenant les étapes :
a) mélange d'agents de gélification comprenant au moins de la pectine à faible teneur en méthoxy, de préférence de la pectine amidée à faible teneur en méthoxy, dans de l'eau,
b) chauffage à une température d'au moins 75 °C, de préférence d'au moins 80 °C,
c) ajout d'une source de calcium avec du sel et des agents aromatisants, et mélange,
d) chauffage à une température d'au moins 75 °C, de préférence d'au moins 80 °C, afin de pasteuriser,
e) remplissage dans des récipients, et
f) refroidissement à la température ambiante en moins de 30 minutes, de préférence en moins de 15 minutes, pour former le gel.

14. Procédé selon la revendication 13, comprenant en outre une réalisation d'un pré-mélange des agents de gélification avec de la maltodextrine et/ou du sirop de glucose et/ou de l'amidon.

15. Procédé selon la revendication 13 ou la revendication 14, comprenant en outre un ajout de matière grasse après le mélange des agents de gélification.

16. Utilisation d'une composition selon l'une quelconque des revendications 1 à 11 pour la préparation d'un produit alimentaire.
